# EUROPÄISCHE PATENTSCHRIFT

(11) **EP 1 216 289 B1**
(45) Veröffentlichungstag und Bekanntmachung des Hinweises auf die Patenterteilung: **02.04.2003**
(21) Anmeldenummer: 00960576.7
(22) Anmeldetag: 01.09.2000
(51) Int. Cl.: C10M 175/00, B01D 36/02

(54) **DOPPELTE FILTRATION ZUM REINIGEN VON KÜHLSCHMIERSFLÜSSIGKEITEN**
DOUBLE FILTRATION METHOD FOR PURIFYING COOLANT-LUBRICANTS
PROCEDE POUR PURIFIER DES REFRIGERANTS LUBRIFIANTS PAR DOUBLE FILTRATION

(30) Priorität: 28.09.1999 DE 19946391
(43) Veröffentlichungstag der Anmeldung: 26.06.2002
(73) Patentinhaber: FILTERWERK MANN+HUMMEL GMBH, 71631 Ludwigsburg (DE)
(72) Erfinder: BREMER, Karl-Günter, 52249 Eschweiler (DE)
(74) Vertreter: Voth, Gerhard
(86) Internationale Anmeldenummer: EP0008535
(87) Internationale Veröffentlichungsnummer: WO01023505

(56) Entgegenhaltungen:
- EP-A- 0 540 825
- WO-A-98/40148
- DE-A- 3 913 845
- US-A- 4 929 351
- US-A- 6 099 727

## Beschreibung

Die Erfindung betrifft ein Verfahren zum Reinigen von Kühlschmierstoffen, welche sich in Metallbearbeitungsanlagen kontinuierlich in Umlauf befinden.

Vor allem zum Kühlen und Schmieren der Schnittstellen und zum Abtransport der anfallenden Abriebpartikel werden in Metallbearbeitungsanlagen flüssige Kühlschmierstoffe auf der Basis von Emulsionen oder Ölen verwendet. Das Kühlschmiermittel befindet sich dabei kontinuierlich im Umlauf. Zur Versorgung mehrerer oder einzelner Metallbearbeitungsmaschinen wird das Kühlschmiermittel über eine zentrale oder dezentrale Versorgungsanlage den einzelnen Maschinen wieder zugeführt. In neueren Fertigungsbereichen wird aufgrund von höheren Anforderungen, d. h. Oberflächenqualitäten oder Werkzeugstandzeiten immer öfter Öl anstelle von Emulsion als Kühlschmierstoff eingesetzt.

Zum Filtrieren von Öl eignen sich Bandfilteranlagen die im Unterdrucksystem arbeiten. Eine solche Bandfilteranlage ist beispielsweise aus der EP 228 210 bekannt. Diese Bandfilteranlagen weisen eine sehr hohe Schmutzkapazität auf und sind in der Lage Schmutzpartikel bis zu einer gewissen Filtrationsgrenze wirksam aus dem Öl herauszufiltern.

Es ist auch bekannt (Fertigungstechnik Band 96,10 1996 Seite 53 bis 71) für die Filtration von Medien in der metallverarbeitenden Industrie Cross-Flow Mircofilter anzuwenden. Dieses hat sich als ein effizientes und qualitativ hervorragendes Reinigungsverfahren von Prozessflüssigkeit erwiesen. Dabei handelt es sich um ein Filtrationsverfahren basierend auf Microfiltrationsmembranen mit Porengrößen zwischen 0,05µm und 0,4µm vorzugsweise in Rohr -oder Kapillarform.

Ähnlich wie bei Ultrafiltration wird die zu reinigende Prozeßlösung bzw. die Flüssigkeit durch die Membranrohre bzw. Kapillaren geleitet. Unter Einwirkung des angelegten Transmembranendrucks passiert klares Filtrat die mikroporöse Membran während alle suspendierten oder emulgierten Partikel größer als die entsprechende Porengröße zurückgehalten und aufkonzentriert werden. Auch Bakterien werden sicher abgetrennt, während gelöste Inhaltsstoffe die Membran weitgehend ohne Behinderung passieren können. Somit ist eine wirksame Trennung von ungelösten und gelösten Wertstoffen möglich. Aus den beim Schleifen, Polieren oder sonstigem Metallbearbeiten anfallenden Flüssigkeit können mit Hilfe dieser Technik Feststoffe vollständig entfernt werden.

Ein Nachteil dieser Filtration ist darin zu sehen, daß die Filtrationsleistung sehr gering und nur für die Filtration von Kleinstmengen geeignet ist.

US-A-4929351 offenbart die verwendung zur Reinigung von Kühlschmierstoff-Ölen von zwei Filtern, wobei das zweite eine Membran enthält.

Der Erfindung liegt die Aufgabe zugrunde, ein Verfahren zum Reinigen von Kühlschmierstoffen zu schaffen, welches eine hohe Filtrationskapazität aufweist und gleichzeitig eine optimale Reinigung der Flüssigkeit gewährleistet. Diese Aufgabe wird durch den Anspruch 1 gelöst.

Der wesentliche Vorteil der Erfindung liegt darin, daß eine Haupt- Nebenstromfiltrierung erfolgt. Während im Hauptstrom ein Filtervlies für eine hohe Filterleistung sorgt, wird im Nebenstrom über eine Membranfiltration die höchstmögliche Reinheit für Öle erzielt.

Gemäß einer Ausgestaltung der Erfindung kann das im Nebenstrom erzeugte Öl der Hydraulikölversorgung in der Werkzeugmaschine zugeführt werden. Dieses Öl wird sowohl zu Neubefüllung als auch zur Nachfüllung der Hydraulikölversorgung genutzt.

Eine weitere Ausgestaltung der Erfindung sieht vor, die beiden Ölkreisläufe in Bearbeitungsmaschinen zu verbinden und damit einen gemeinsamen Ölkreislauf zu realisieren. Diese Verbindung hat erhebliche wirtschaftliche Vorteile. Ein einziges Filtersystem ist für zwei oder mehrere Ölkreisläufe einsetzbar.

Eine weitere Ausgestaltung der Erfindung sieht vor, den Hydraulikölkreislauf kontinuierlich oder diskontinuierlich mit Reinstöl zu versorgen. Es ist zweckmäßig, einen Reinstölbehälter vorzusehen, der je nach Bedarf mit Öl befüllbar ist.

Eine Ergänzung der Erfindung liegt in der Anwendung einer Anschwemmfiltration oder einer Zelluloseimpfung. Außerdem besteht die Möglichkeit, eine Querstromultrafiltration vorzusehen. Sowohl bei der Anschwemmfiltration als auch bei der Zelluloseimpfung wird Filterhilfsmittel auf das Filterelement, d. h. auf das Filtervlies aufgebracht und damit die Filterwirkung verbessert.

Da Öle eine Affinität zum Feinschmutz aus dem spanenden Fertigungsvorgang haben, sind hochfeinfiltrierende Filtrationsanlagen erforderlich. Geeignet sind Anschwemmfilteranlagen, bei denen Bleicherde zur Pflegefiltration bevorzugt wird, wobei diese Bleicherde eine durchschnittliche Korngröße von unter 0,06 mm besitzt. Als Anschwemmfilter sind auch Systeme bekannt, die mit Eigenschmutzan-schwemmung arbeiten. Dieses Verfahren müssen jedoch mit anderen Verfahren wie beispielsweise Nebenstromfiltration gekoppelt werden.

Eine weitere Ausgestaltung der Erfindung sieht vor, den von der Filteranlage gebildete Restschmutz über eine Zentrifuge zu entwässern. Die von der Zentrifuge gereinigte Flüssigkeit wird in den Filtrationskreislauf zurückgeführt. Der verdichtet kann Schmutz kontinuierlich oder diskontinuierlich ausgetragen werden. Die Reinigungsanlagen können ergänzt werden durch Sedimentationsanlagen, Magnetabscheider oder Filter beliebiger Bauart, die die Flüssigkeit von den festen Teilen befreien.

Ein weiterer Vorteil des beschriebenen Verfahrens besteht darin, daß beispielsweise Ölleckagen an der Werkzeugmaschinenhydraulik sich nicht mehr nachteilig auf die verschiedenen Ölkreisläufe auswirken, da dieses sogenannte Lecköl dem gemeinsamen Kreislauf wieder zugeführt werden kann und dort gereinigt wird. Gerade dieses Verbundsystem hat den Vorteil, daß beispielsweise Leckölanteile in der Hydraulik konstruktiv geplant werden können, wobei die dann noch größeren Ölverlust bewußt zur Verringerung von Verschleißreibungen in Dichtungen usw. nutzbar sind. Damit lassen sich Dichtungsreibungen reduzieren, wodurch auch der Wirkungsgrad der Hydraulik erhöht werden kann sowie die Wärmeeinbringung spürbar reduziert wird. Damit wird gleichzeitig eine weitere Reduzierung von diversen Hydraulikbauteilen sowie generelle Optimierungen im Hydraulikbereich erzielt. Außerdem reduzieren sich auch die Entsorgungskosten, da Restöle nicht oder nur in geringen Mengen anfallen.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Die Erfindung wird nachfolgend anhand eines Ausführungsbeispiels näher erläutert.

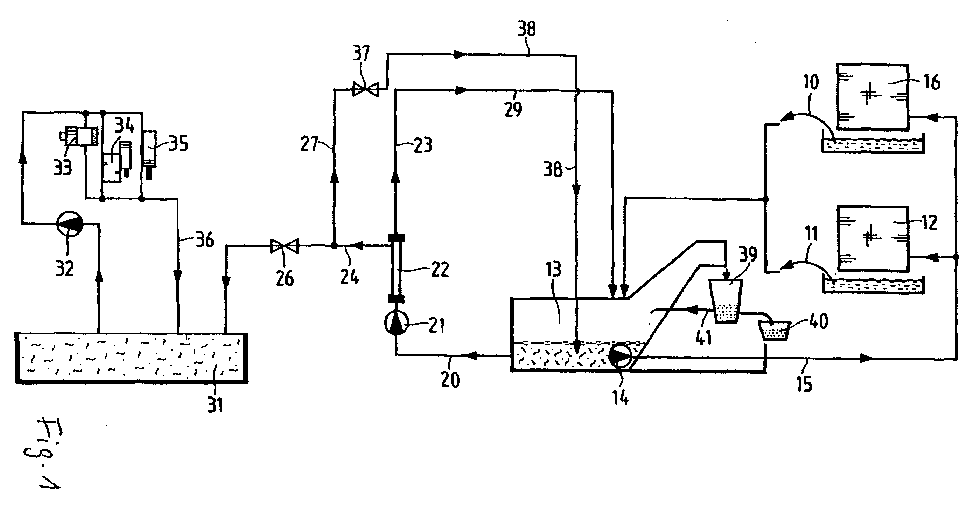

Die Figur zeigt die Verknüpfung eines Hydraulikölkreislaufes mit einem Kühlschmierstoff-Ölkreislauf in einer schematischen Darstellung.

Das von Werkzeugmaschinen 16, 12 bei der spanabhebenden Bearbeitung erzeugte, mit Spänen und Verunreinigungen belastete Kühlschmiermittel wird über die Leitungen 10, 11 einem Unterdruckbandfilter 13 zugeführt. Im Unterdruckbandfilter 13 ist ein umlaufendes Filtervlies vorgesehen. Die dort gereinigte Flüssigkeit gelangt über die Pumpe 14 und die Leitungen 15 zurück zu den Werkzeugmaschinen 12, 16. Ein Teil des im Unterdruckfilter gereinigten Öles, das bereits mit einer Filterfeinheit von ca. 20 µm bis 30 µm gereinigt wurde, gelangt über die Leitung 20 und eine Pumpe 21 zu einer Querstromfiltermembran 22. Diese Querstromfiltermembran scheidet Öl mit einer hohen Reinheit aus. Dieses Öl gelangt über die Leitungen 24 und Ventil 26 zu einem Reinölbehälter des Hydraulikölkreislaufes. Dieser Reinölbehälter 31 kann über eine automatische Niveausteuerung verfügen. Dies bedeutet, daß Hydrauliköl dann nachgefüllt wird, wenn ein bestimmtes Behälterniveau unterschritten wurde. Von diesem Reinölbehälter 31 gelangt das Öl in den Hydraulikölkreislauf. Dieser Hydraulikölkreislauf ist lediglich schematisch durch eine Pumpe 32 und diverse Verbraucher 33, 34, 35 dargestellt. Von den Verbrauchern gelangt das Öl über die Leitung 36 zurück in den Reinöltank. Selbstverständlich befinden sich diese Verbraucher 33 bis 35 in den Werkzeugmaschinen 12, 16 bzw. in peripheren, hydraulikbetriebenen Maschinen. Das durch die Querstromfiltermembran 22 geströmte ungereinigte Öl bzw. aufkonzentrierte Öl gelangt über die Leitungen 23 und den Rücklauf 29 auf die Schmutzseite des Unterdruckfilters 13. Sofern im Hydraulikölkreislauf kein Öl benötigt wird, kann das von der Querstromfiltermembran 22 erzeugte Reinstöl über die Nebenstromleitung 27 und das Ventil 37 sowie die Leitung 38 dem Reinölbereich des Unterdruckfilters 13 zugeführt werden. Dieser Nebenstrom trägt damit zur Verbesserung der Ölqualität des Kühlschmierstoffölkreislaufes bei. Dadurch wird der über die Werkzeugmaschine gepumpte Kühlschmierstoffkreislauf ständig auch mit Feinstfiltrat gemixt, so daß sich auch im Kühlschmierstoffkreislauf die Ölqualität deutlich erhöht und eine deutliche Verlängerung der Standzeit der Werkzeuge erzielt wird. Die beschriebene Ölverbundanlage ist wie in der Figur gezeigt aus einer Kühlschmierstoff-Filteranlage konzipiert, die mit einer Pflegefiltereinrichtung ergänzt wird, wobei diese Pflegefiltereinrichtung aus einer Querstofffiltermembran besteht. Der aus dem Unterdruckfilter 13 austretende Schmutz gelangt in eine Zentrifuge 39, wird dort entwässert und der Entsorgung über einen Behälter 40 zugeführt. Die aus der Zentrifuge austretende Flüssigkeit gelangt über die Leitung 41 in den Rohflüssigkeitsbereich des Unterdruckfilters 13.

## Patentansprüche

1. Verfahren zur Reinigung von Kühlschmierstoffen, welche sich in Metallbearbeitungsanlagen kontinuierlich in Umlauf befinden, unter Verwendung von im Kreislauf angeordneten Filtrationsanlagen, wobei im Hauptstrom und Im Nebenstrom eine Filtration erfolgt und im Hauptstrom, insbesondere ein Filtervlies und im Nebenstrom ein Membranfilter angeordnet ist, wobei das von dem Membranfilter gereinigte Öl der Hydraulikölversorgung und / oder im Nebenstrom der Kühlschmierstoffversorgung zugeführt wird.

2. Verfahren nach Anspruch 1, **dadurch gekennzeichnet, daß** Kühlschmierstoffkreislauf und Hydraulikölkreislauf in einem gemeinsamen Kreislauf verbunden sind.

3. Verfahren nach Anspruch 1 oder 2, **dadurch gekennzeichnet, daß** die kontinuierliche oder diskontinuierliche Filtration des Verbundsystems auch den Hydraulikölkreislauf nachfüllt.

4. Verfahren nach einem der vorherigen Ansprüche, **dadurch gekennzeichnet, daß** die Filtration Im Kühlschmierstoffkreislauf durch eine Zelluloseimpfung oder eine Querstromultrafiltration ergänzt wird.

5. Verfahren nach einem der vorigen Ansprüche, **dadurch gekennzeichnet, daß** weitere bei Werkzeugmaschinen übliche Kreisläufe integriert werden.

6. Verfahren nach einem der folgenden Ansprüche, **dadurch gekennzeichnet, daß** der von der Filteranlage gebildete Restschmutz über eine Zentrifuge entwässert wird.

7. Verfahren nach einem der vorherigen Ansprüche, **dadurch gekennzeichnet, daß** ein Zwischenbehälter zwischen Filteranlage und Membranfilter vorgesehen ist

## Claims

1. Method for cleaning cooling lubricants which are continuously circulating in metal treatment installations and by which method filtering installations located in the circuit are used ; whereby a filtering occurs in the principal circuit and in the secondary circuit and whereby a non-woven filter is arranged in the principal circuit and a membrane filter is arranged in the secondary circuit ; whereby the oil cleaned by the membrane filter is conducted to the hydraulic oil supply and/or to the secondary circuit of the cooling lubricant supply .

2. Method according to claim 1, **characterised in that** the cooling lubricant circuit and the hydraulic oil circuit are connected to each other by a common circuit.

3. Method according to claim 1 or 2, **characterised in that** the continuous or discontinuous filtering of the bonded system fills also up the hydraulic oil circuit .

4. Method according to one of the preceding claims, **characterised in that** the filtering in the cooling lubricant circuit is replaced by an injection of cellulose or an ultra-filtering of the transversal flow.

5. Method according to one of the preceding claims, **characterised in that** other circuits usually used on machine tools are integrated.

6. Method according to one of the following claims, **characterised in that** the residual dirt formed by the filtering installation is dehydrated by a centrifugal.

7. Method according to one of the preceding claims, **characterised in that** an intermediary recipient is provided between the filtering installation and the membrane filter.

## Revendications

1. Procédé pour nettoyer des lubrifiants de refroidissement qui circulent continuellement dans des installations de traitement de métal, par l'utilisation d'installations de filtrage situées dans le circuit ; une filtration survenant dans le courant principal et dans le courant secondaire et un filtre en non-tissé étant disposé dans le courant principal et un filtre à membrane étant disposé dans le courant secondaire ; l'huile nettoyée par le filtre à membrane étant conduite vers l'alimentation en huile hydraulique et / ou dans le courant secondaire de l'alimentation en lubrifiants de refroidissement.

2. Procédé selon la revendication 1, **caractérisé en ce que** le circuit de lubrifiants de refroidissement et le circuit d'huile hydraulique sont liés dans un circuit commun.

3. Procédé selon la revendication 1 ou 2, **caractérisé en ce que** la filtration continue ou discontinue du système lié remplit également le circuit d'huile hydraulique.

4. Procédé selon une des revendications précédentes, **caractérisé en ce que** la filtration dans le circuit de lubrifiants de refroidissement est remplacée par une injection de cellulose ou par une filtration extrême du flux transversal .

5. Procédé selon une des revendications précédentes, **caractérisé en ce qu'**autres circuits habituels dans des machines-outils sont intégrés.

6. Procédé selon une des revendications suivantes, **caractérisé en ce que** la saleté résiduelle formée par l'installation de filtrage est déshydratée par une centrifuge.

7. Procédé selon une des revendications précédentes, **caractérisé en ce qu'**un récipient intermédiaire est prévu entre l'installation de filtrage et le filtre à membrane.
